# EUROPEAN PATENT SPECIFICATION

(11) **EP 4 467 574 B1**
(45) Date of publication and mention of the grant of the patent: **18.02.2026**
(21) Application number: 23020240.0
(22) Date of filing: 23.05.2023
(51) Int. Cl.: C08B 30/04, C08B 30/12, C08L 97/02, A23L 7/10, A21D 2/36

(54) **TECHNOLOGY OF MAINTAINING FIBER FROM WHEAT BRAN**
TECHNOLOGIE ZUR ERHALTUNG VON FASERN AUS WEIZENKLEIE
TECHNOLOGIE DE MAINTIEN DE FIBRE À PARTIR DE SON DE BLÉ

(43) Date of publication of application: 27.11.2024
(73) Proprietor: Biomol Med Sp z o. o., 94 412 Lodz (PL)
(72) Inventor: WOJDON, Emilia, 95-083 Kazimierz (PL); ZALAS, Mariola, 94-003 Lodz (PL); PUCZKOWSKI, Slawomir, 91-357 Lodz (PL)

(56) References cited:
- CN-A- 109 170 922
- MAJZOOBI MAHSA ET AL: "Effect of particle size reduction, hydrothermal and fermentation treatments on phytic acid content and some physicochemical properties of wheat bran", JOURNAL OF FOOD SCIENCE AND TECHNOLOGY, SPRINGER (INDIA) PRIVATE LTD, INDIA, vol. 51, no. 10, 19 August 2012 (2012-08-19), pages 2755 - 2761, XP035405428, ISSN: 0022-1155, [retrieved on 20120819], DOI: 10.1007/S13197-012-0802-0

## Description

The subject of the invention is a method of obtaining fiber from wheat bran.

CN109170922 A discloses a method for obtaining wheat-bran soluble dietary fiber, comprising: pulverizing wheat bran and treating it with papain and α-amylase; adding citric acid and treating with ultrasounds; extracting with subcritical water.

Majzoobi et al., J Food Sci Technol 51 (2014) 2755-2761 discloses a method for reducing phytate content in wheat-bran dietary fibers based on the combination of particle-size reduction, hydrothermal treatment in the presence of acetate buffer and fermentation.

The method of obtaining fiber according to the invention is characterized in that wheat bran is rinsed with water at a temperature of 12-20 ° C, then poured with water at a temperature of 12-20 ° C and anhydrous calcium carbonate is added in the following proportion: per 1 kg of dry bran, 5 grams of anhydrous calcium carbonate. After mixing, the solution is allowed to soak for a minimum of 12 hours at 12-20% °C.

After 12 hours, the water is drained. Water is poured into the soaked wheat bran in an amount covering the entire volume of the bran. Then, citric acid monohydrate is added in the following proportion: for 1 kg of dry bran, 5 grams of citric acid monohydrate are added.

After mixing, the solution should be brought to a temperature of 90-95 °C and maintained at this temperature for a minimum of 15 minutes; the solution should be stirred every five minutes. After this time, the water is drained off and then a 0.1% aqueous solution of sodium chloride at a temperature of 12-15 °C is poured; for 1 kg of wheat bran 5 liters of salt solution. The solution is mixed, then filtered. Wheat bran is rinsed with water at 12-15 °C; about 10 liters. The water is drained.

The resulting bran slurry is transferred to a dryer. It is dried at a temperature of 70-80 °C until the moisture content is below 10%.

The dry mass of wheat bran obtained in this way was ground in a mechanical mill to obtain a fineness (mesh): 200-500.

The advantages of the method are:
1. cleaning of wheat bran from environmental pollutants,
2. loss of the ability to complex bioelements through phytates,
3. obtaining resistant starches.

## Claims

1. A method of obtaining a fiber, in which wheat bran is subjected to the following processes:
a. cleaning from environmental contaminants by rinsing with water at 12-20 °C and boiling at 90-95 °C in a citric acid solution for a minimum of 15 minutes;
b. inactivation of phytates by soaking in an aqueous solution of calcium carbonate for a minimum of 12 hours at a temperature of 12-20 °C,
c. formation of resistant starches, by rapid cooling with an aqueous solution of sodium chloride, of wheat bran suspension.

## Patentansprüche

1. **Verfahren zur Gewinnung von Ballaststoffen,** bei dem Weizenkleie den folgenden Prozessschritten unterzogen wird:
a) Reinigung von umweltbedingten Verunreinigungen, durch Spülen mit Wasser mit einer Temperatur von 12-20 °C und anschließendes Kochen bei 90-95 °C in einer Zitronensäurelösung mindestens 15 Minuten lang;
b) Deaktivierung von Phytaten, durch Einweichen in einer wässrigen Calciumcarbonat-Lösung mindestens 12 Stunden lang bei einer Temperatur von 12-20 °C;
c) Bildung resistenter Stärke, durch schnelles Abkühlen einer Weizenkleiesuspension mittels einer wässrigen Natriumchlorid-Lösung.

## Revendications

1. **Procédé d'obtention de fibres,** dans lequel le son de blé est soumis aux étapes suivantes :
a) nettoyage des contaminants environnementaux par rinçage à l'eau à une température de 12 à 20 °C et ébullition à 90-95 °C dans une solution d'acide citrique pendant au moins 15 minutes ;
b) inactivation des phytates par trempage dans une solution aqueuse de carbonate de calcium pendant au moins 12 heures à une température de 12 à 20 °C ;
c) formation d'amidons résistants par un refroidissement rapide de la suspension de son de blé à l'aide d'une solution aqueuse de chlorure de sodium.
